# EUROPEAN PATENT APPLICATION

(11) **EP 1 670 265 A1**
(43) Date of publication of application: **14.06.2006**
(21) Application number: 05292425.5
(22) Date of filing: 14.11.2005
(51) Int. Cl.: H04Q 7/22

(54) **System for automatically providing location related information to a mobile terminal.**

(30) Priority: 09.12.2004 JP 2004356396
(71) Applicant: Evolium S.A.S., 75008 Paris (FR)
(72) Inventor: Hayashi, Hiroki, Yokohama, Kanagawa (JP); Kawansihi, Toshiharu, Kawasaki-city, Kanagawa (JP); Arai, Koji, Kawasaki-city, Kanagawa (JP)
(74) Representative: Brose, Gerhard

(57) **Abstract**

[Means to Achieve the Object] A system for transmitting information to a mobile terminal by push type service, comprising:
a mobile terminal equipped with a GPS function; and
a data center transmitting the information to the mobile terminal by the push type service,
the data center comprising a transmitting/receiving unit, a movement record storing unit which stores the movement record of the mobile terminal together with the time information, an analogizing unit which analogizes an action pattern of the mobile terminal user, based on the movement record and the time information, an information database, and an information selecting unit which selects the information to be transmitted to the mobile terminal,
the information selecting unit of the data center selecting the information, based on the action pattern of the mobile terminal user analogized by the analogizing unit,
the transmitting/receiving unit of the data center transmitting the information, which is selected by the information selecting unit, to the mobile terminal by the push type service.

## Description

### [Field of the Invention]

The present invention relates to a system for transmitting information by push type service, based on the action history of a mobile terminal user, and, more particularly, to a system for transmitting information, wherein a movement record of a mobile terminal determined by the GPS function of the mobile terminal together with time information are stored in a data center, an action pattern of the mobile terminal user is analogized based on the stored movement record and time information by the data center, and information selected based on the analogized action pattern is transmitted to the mobile terminal by push type service.

Necessary information can be obtained by accessing target information sources through various means.

For example, a train user can obtain information about the situation of train operation including accident information, through an Internet service or a telephone service, before the user takes gets on a train. The train user can also obtain such information through information displayed or announced in a station yard. A car user can obtain information such as traffic jam information about the route used by the user during driving, through the radio or the vehicle information communication system (VICS) of a car navigation system. The car user can also obtain such information through information displayed with display devices provided on the road. A consumer can obtain information about commercial sales such as bargain sales, through newspaper inserts, commercial films on TV or the radio, or the Internet service.

In any case, at each time to obtain necessary information, it is necessary to access the target information sources through various means. Thus, it is preferable to provide a method for providing information without such action, that is to say, a method for providing information, in which the information is transmitted to the user and shown with a display to the user by push type service, without any positive action by the user.

A method of transmitting information to a mobile terminal carried by a user by push type service is known. In such case that information is transmitted to the user by the push type service, one problem resides in that it is troublesome to search for the necessary information and it puts the user to inconvenience, because the information is transmitted to the user at random and this information may include a lot of information unnecessary to user.

Methods of selecting information with high possibility of being needed by user, and transmitting the information to the users by push type service have been proposed. For example, Japanese Patent Application Laid-Open No. 2003-134545 discloses a content distributing method by which the location information of a user is managed, a movement path of the user is predicted from the managed location information, and information suitable for the location of the user is transmitted to the user. Japanese Patent Application Laid-Open No. 2003-233752 discloses a system for automatically distributing local information, based on the location information of the user and the usage record of the user.

However, method, in which the information is selected and transmitted merely based on the location information and the predicted location of the user, or the usage record of the user, cannot select sufficient accurately the information with high possibility of being needed by the user and may contain a lot of information unnecessary to the user.
[Patent Document 1] Japanese Patent Application Laid-Open No. 2003-134545
[Patent Document 2] Japanese Patent Application Laid-Open No. 2003-233752

### [Disclosure of the Invention]

### [Problems to be solved by the Invention]

The present invention provides a system which accurately selects information with high possibility of being needed by users, and transmits information by push type service, without transmitting unnecessary or undesired information. With this system, information with high possibility of being needed by the mobile terminal user is provided to the user, without any positive action by the user and life convenience is provided.

### [Means to solve the Problem]

According to a first aspect of the present invention, a system for transmitting information to a mobile terminal by push type service is provided, the system comprises:
a mobile terminal equipped with a GPS function; and
a data center transmitting the information to the mobile terminal by the push type service,
the mobile terminal comprising a movement record transmitting unit which transmits to the data center a movement record of the mobile terminal determined by the GPS function together with time information, in addition to essential components for performing wireless communication,
the data center comprising a transmitting/receiving unit which transmits a signal to the mobile terminal and receives a signal from the mobile terminal, a movement record storing unit which stores the movement record of the mobile terminal together with the time information transmitted from the movement record transmitting unit of the mobile terminal, an analogizing unit which analogizes an action pattern of the mobile terminal user, based on the movement record and the time information stored in the movement record storing unit, an information database which stores information to be transmitted to the mobile terminal, and an information selecting unit which selects the information to be transmitted to the mobile terminal from the information included in the information database,
the information selecting unit of the data center selecting the information, based on the action pattern of the mobile terminal user analogized by the analogizing unit,
the transmitting/receiving unit of the data center transmitting the information, which is selected by the information selecting unit, to the mobile terminal by the push type service.

According to such a configuration, it is necessary for the mobile terminal user to only take action carrying the mobile terminal, in order to receive the information with high possibility of being needed by the user analogized based on the action pattern of the user transmitted from the data center by push type service. Thus, the mobile terminal user can receive the information without any positive action to obtain the information. So, even the aged who is apt to not be familiar with electronic devices such as mobile terminals can easily obtain the information. Further, information is not provided to a mass of users including those who have no possibility of needing the information, but to a restricted number of users who have high possibility of needing the information. Thus, unnecessary resources can be eliminated, and resource saving can be achieved at an information providing side.

According to a second aspect of the present invention, the mobile terminal further comprises an unnecessary information notifying unit which notifies to the data center of unnecessary information, which dose not have to be transmitted from the data center, and
the data center further comprises an unnecessary information storing unit which stores the unnecessary information notified by the unnecessary information notifying unit of the mobile terminal, and the information selecting unit of the data center selects the information based on the action pattern of the mobile terminal user analogizedby the analogizing unit, referring to the unnecessary information stored in the unnecessary information storing unit.

According to such a configuration, the mobile terminal user can specify the information of not having to be transmitted among the information to be transmitted by push type service. Thus, only the information with high possibility of being needed by the user is transmitted.

According to a third aspect of the present invention, the time information transmitted together with the movement record from the movement record transmitting unit of the mobile terminal includes information about time zones, days of the week, and weekdays or holidays, and
the analogizing unit of the data center analogizes the action pattern of the user of the mobile terminal according to categories of the time zones, the days of the week, and the weekdays or holidays.

According to such a configuration, the information selecting unit of the data center can select more accurately the information, based on analogized action pattern of the mobile terminal user according to categories of times zones, days of the week, and weekdays or holidays.

According to a fourth aspect of the present invention, the analogizing unit of the data center analogizes a traffic route that is used by the mobile terminal user in a predetermined time zone of a predetermined day of the week, based on the action pattern of the mobile terminal user to be analogized, and
the information selecting unit of the data center selects the information to be transmitted to the mobile terminal, in such a manner that the information contains a piece of information about the analogized traffic route by the analogizing unit, which is used by the mobile terminal user in the predetermined time zone of the predetermined day of the week.

According to such a configuration, the data center can select and transmit the information with high possibility of being needed by the user, which includes information about the traffic route used by the mobile terminal user in a predetermined time zone of a predetermined day of the week, for example, information about the situation of train operation of the traffic route used by the user, traffic jam information about the route used by the user, information about roadwork on the route used by the user, information about event such as concert to be held near the route used by the user, and information about bargain sales to be held at the stores near the route used by the user.

### [Best Modes to Carry Out the Invention]

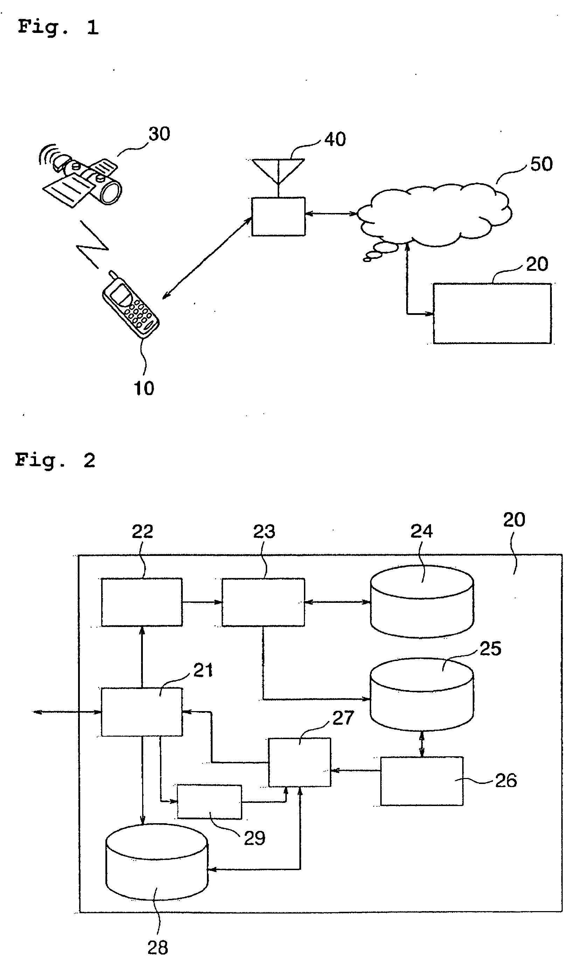

Fig. 1 is a schematic view of a system which transmits information to a mobile terminal by push type service according to the present invention.

The system shown in Fig. 1 includes a mobile terminal 10 that is carried by a user, a GPS satellite 30 that can communicate with the mobile terminal 10 via a wireless communication, a base station 40 that is wireless-connected to the mobile terminal 10, Internet 50 that is connected to the base station 40, and a data center 20 that is connected to the Internet 50. The data center 20 is connected to various information sources (not shown) via the Internet 50. Each of the information sources contains various information to be transmitted to the user of the mobile terminal 10. For example, the information sources contain the situation information of train operation such as accident information, traffic jam information, roadwork information, event information such as concert, and bargain sale information to be held at stores.

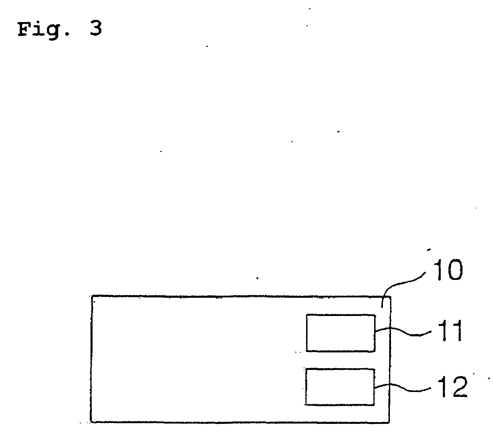

As shown in Fig. 3, the mobile terminal 10 includes a movement record transmitting unit 11 and an unnecessary information notifying unit 12, in addition to essential components to perform wireless communication. The mobile terminal 10 is transmitted the movement record containing the latitude, longitude, and altitude of the mobile terminal 10 from the GPS satellite 30. The mobile terminal 10 transmits the movement record together with time information, to the data center 20 via the base station 40 and the Internet 50 by using the movement record transmitting unit 11.

Fig. 2 is a schematic view of the data center 20. The data center 20 includes a transmitting/receiving unit 21, a movement record acquiring unit 22, a movement record processing unit 23, a map database 24, a movement record storing unit 25, an analogizing unit 26, an information selecting unit 27, an information database 28, and an unnecessary information storing unit 29.

The transmitting/receiving unit 21 performs information transmission and reception with the mobile terminal 10 or each of the information sources via the Internet 50. The transmitting/receiving unit 21 is connected to the movement record acquiring unit 22, the information selecting unit 27, the information database 28, and the unnecessary information storing unit 29. When the movement record together with the time information is transmitted from the movement record transmitting unit 11 of the mobile terminal 10 to the transmitting/receiving unit 21, the transmitting/receiving unit 21 transmits the received time information and movement record to the movement record acquiring unit 22. The movement record acquiring unit 22, which has received the time information and movement record, transmits the necessary movement record together with the time information to the movement record processing unit 23. The movement record processing unit 23 processes the movement record of the mobile terminal 10, using map data stored in the map database 24. The movement record processing unit 23 then transmits the processed movement record together with the time information to the movement record storing unit 25. The movement record storing unit 25 stores the transmitted movement record together with the time information. When information is transmitted from an information source (not shown) via the Internet 50 to the transmitting/receiving unit 21, the transmitting/receiving unit 21 transmits the received information to the information database 28, which stores the information. When unnecessary information not need to be transmitted in future to the mobile terminal 10 is transmitted from the unnecessary information notifying unit 12 of the mobile terminal 10 to the transmitting/receiving unit 21, the transmitting/receiving unit 21 transmits the received unnecessary information to the unnecessary information storing unit 29, which stores the unnecessary information. When information selected by the information selecting unit 27 is transmitted to the transmitting/receiving unit 21, the transmitting/receiving unit 21 transmits the information to the mobile terminal 10.

The analogizing unit 26 analogizes the action pattern of the mobile terminal 10 user, based on the movement record and the time information of the mobile terminal 10 user stored in the movement record storing unit 25. For example, the analogizing unit 26 determines the shop, the facility, or the means of transportation, through a mapping operation performed on a map based on the latitude and longitude.

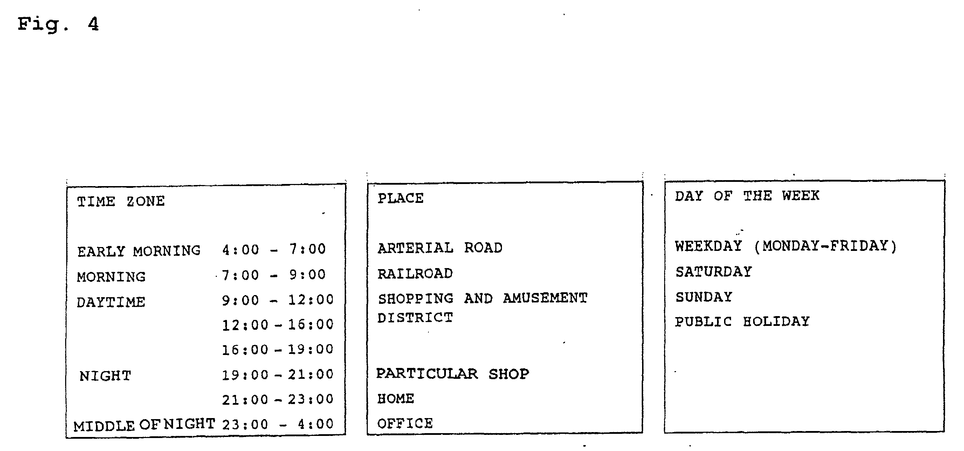

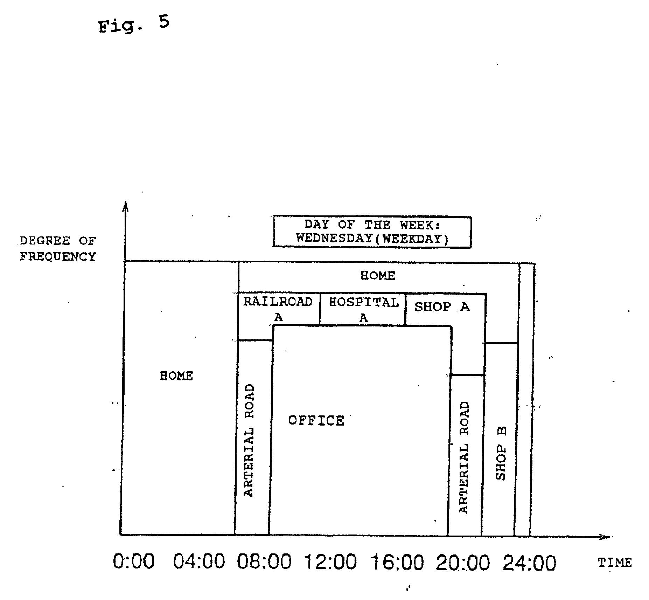

Fig. 4 illustrates an example of constituent sections of an analogizing program for analogizing the action pattern of the mobile terminal 10 user. The constituent sections shown in Fig. 4 include time zones, places, and days of the week. The time zones include early morning (4:00-7:00), morning (7:00-9:00), daytime (9:00-12:00, 12:00-16:00, 16:00-19:00), night (19:00-21:00, 21:00-23:00), and middle of night (23:00-4:00). The places include arterial roads, railroads, shopping and amusement districts, particular shop , home, and office. The days of the week include weekdays (Monday-Friday), Saturdays, Sundays, and Public Holidays. These constituent sections are mere examples, and may include various other constituent sections. The analogizing unit 26 analogizes the action pattern of the user, based on the action of the user diagrammed in a frequency table shown in Fig. 5. The table shown in Fig. 5 is formed by categorizing the location information and the time information of the user into the constituent sections shown in Fig. 4.

Fig. 5 shows the frequency distribution of the action of the mobile terminal 10 user on Wednesdays. The following can be analogized from Fig. 5.

Condition: Wednesdays
Analogical inference 1: The user seems to be at home in middle of night and early morning (23:00-7:00).
Analogical inference 2: In the morning (7:00-9:00), the user seems to use an arterial road as the first candidate, use railroad A as the second candidate, or be at home as the third candidate.
Analogical inference 3: In the daytime (9:00-12:00), the user seems to work at the office as the first candidate, or use the railroad A or be at home as the second candidate.
Analogical inference 4: In the daytime (12:00-16:00), the user seems to work at the office as the first candidate, or go to hospital A or be at home as the second candidate.
Analogical inference 5: In the daytime (16:00-19:00), the user seems to work at the office as the first candidate, or go to shop A or be at home as the second candidate.
Analogical inference 6: In the night (19:00-21:00), the user seems to use the arterial road as the first candidate, go to the shop A as the second candidate, or be at home as the third candidate.
Analogical inference 7: In the night (21:00-23:00), the user seems to go to shop B as the first candidate, or be at home as the second candidate.

Based on the above analogical inferences, the information selecting unit 27 selects information to be transmitted to the mobile terminal 10 user. For example, since the user seems to use the arterial road as the first candidate during 7:00-9:00 on Wednesday, the information selecting unit 27 selects the information about the arterial road. Since the user seems to go to the shop B as the first candidate during 21:00-23:00 on Wednesday, the information selecting unit 27 selects the information about the shop B.

In this manner, the information selecting unit 27 selects information, based on the action pattern of the mobile terminal 10 user analogized by the analogizing unit 26. Thus, the data center 20 can selectively transmit only the information with the highest possibility of being needed by the user, to the mobile terminal 10.

The information transmitted from the transmitting/receiving unit 21 of the data center 20 to the mobile terminal 10 via the Internet 50 and the base station 40 is shown to the user using the display of the mobile terminal 10. In this manner, the user is provided with the information that is highly needed, without any positive action.

If there is a piece of unnecessary information among the information transmitted from the data center 20, the mobile terminal 10 user can notify the unnecessary information to be transmitted to the data center 20, using the unnecessary information notifying unit 12. The notified unnecessary information is stored in the unnecessary information storing unit 29. The information selecting unit 27 of the data center 20 refers to the unnecessary information stored in the unnecessary information storing unit 29, and avoids selecting the unnecessary information while selecting information to be transmitted to the mobile terminal 10 user. Thus, the user can be provided only with information necessary to himself/herself .

As described above, in accordance with the present invention, the mobile terminal 10 user can receive information with high possibility of being needed, without any positive action. Accordingly, even the aged who is apt to not be familiar with electronic devices such as mobile terminals can easily obtain the information. Further, information is not provided to a mass of users including those who have no possibility of needing the information, but to a restricted number of users who have high possibility of needing the information. Thus, unnecessary resources can be eliminated, and resource saving can be achieved at an information providing side.

### [Brief Description of the Drawings]

Fig. 1 is a schematic view of a system according to the present invention.
Fig. 2 is a schematic view of the structure of the data center.
Fig. 3 is a schematic view of the mobile terminal.
Fig. 4 shows an example of constituent sections used in an analogizing program.
Fig. 5 shows the action pattern of the mobile terminal user on Wednesdays in the form of a frequency table.

### [Description of Reference Numeral]

- 10: mobile terminal
- 11: movement record transmitting unit
- 12: unnecessary information notifying unit
- 20: data center
- 21: transmitting/receiving unit
- 22: movement record acquiring unit
- 23: movement record processing unit

- 24: map database
- 25: movement record storing unit
- 26: analogizing unit
- 27: information selecting unit
- 28: information database
- 29: unnecessary information storing unit
- 30: GPS satellite
- 40: base station
- 50: Internet

## Claims

1. A system for transmitting information to a mobile terminal by push type service, comprising:
a mobile terminal equipped with a GPS function; and
a data center transmitting the information to the mobile terminal by the push type service,
the mobile terminal comprising a movement record transmitting unit which transmits to the data center a movement record of the mobile terminal determined by the GPS function together with time information, in addition to essential components for performing wireless communication,
the data center comprising a transmitting/receiving unit which transmits a signal to the mobile terminal and receives a signal from the mobile terminal, a movement record storing unit which stores the movement record of the mobile terminal together with the time information transmitted from the movement record transmitting unit of the mobile terminal, an analogizing unit which analogizes an action pattern of the mobile terminal user, based on the movement record and the time information stored in the movement record storing unit, an information database which stores information to be transmitted to the mobile terminal, and an information selecting unit which selects the information to be transmitted to the mobile terminal from the information included in the information database,
the information selecting unit of the data center selecting the information, based on the action pattern of the mobile terminal user analogized by the analogizing unit,
the transmitting/receiving unit of the data center transmitting the information, which is selected by the information selecting unit, to the mobile terminal by the push type service.

2. The system according to claim 1, wherein
the mobile terminal further comprises an unnecessary information notifying unit which notifies to the data center of unnecessary information, which dose not have to be transmitted from the data center, and
the data center further comprises an unnecessary information storing unit which stores the unnecessary information notified by the unnecessary information notifying unit of the mobile terminal, and the information selecting unit of the data center selects the information based on the action pattern of the mobile terminal user analogizedby the analogizing unit, referring to the unnecessary information stored in the unnecessary information storing unit.

3. The system according to claim 1, wherein
the time information transmitted together with the movement record from the movement record transmitting unit of the mobile terminal includes information about time zones, days of the week, and weekdays or holidays, and
the analogizing unit of the data center analogizes the action pattern of the mobile terminal user according to categories of the time zones, the days of the week, and the weekdays or holidays.

4. The system according to claim 3, wherein
the analogizing unit of the data center analogizes a traffic route that is used by the mobile terminal user in a predetermined time zone of a predetermined day of the week, based on the action pattern of the mobile terminal user to be analogized, and
the information selecting unit of the data center selects the information to be transmitted to the mobile terminal, in such a manner that the information contains a piece of information about the traffic route analogizedby the analogizing unit, which is used by the mobile terminal user in the predetermined time zone of the predetermined day of the week.

## Amended claims

### Amended claims in accordance with Rule 86(2) EPC.

**1.**
A system for transmitting information to a mobile terminal (10) by push type service, comprising:
a mobile terminal (10) equipped with a GPS function; and
a data center (20) transmitting the information to the mobile terminal by the push type service,
the mobile terminal (10) comprising a movement record transmitting unit (11) which transmits to the data center (20) a movement record of the mobile terminal determined by the GPS function together with time information, in addition to essential components for performing wireless communication,
the data center (20) comprising a transmitting/receiving unit (21) which transmits a signal to the mobile terminal (10) and receives a signal from the mobile terminal (10), a movement record storing unit (25) which stores the movement record of the mobile terminal (10) transmitted from the movement record transmitting unit (11) of the mobile terminal (10), , an information database (28) which stores information to be transmitted to the mobile terminal (10), and an information selecting unit (27) which selects the information to be transmitted to the mobile terminal (10) from the information included in the information database (28),
the transmitting/receiving unit (21) of the data center (20) transmitting the information, which is selected by the information selecting unit (27), to the mobile terminal (10) by the push type service, **characterized in, that** said movement record storing unit (25) stores said movement record of the mobile terminal (10) together with time information transmitted from the movement record transmitting unit (11) of the mobile terminal (10), that the data center (20) comprises a deducing unit (26) which deduces an action pattern of the mobile terminal user, based on the movement record and the time information stored in the movement record storing unit (25), and that said information selecting unit (27) of the data center (20) selects said information based on the action pattern of the mobile terminal user deduced by the deducing unit (26).

**2.**
The system according to claim 1, **characterized in, that**
the mobile terminal (10) further comprises an unnecessary information notifying unit (12) which notifies to the data center (20) of unnecessary information, which does not have to be transmitted from the data center (20), and
the data center (20) further comprises an unnecessary information storing unit (29) which stores the unnecessary information notified by the unnecessary information notifying unit (12) of the mobile terminal (10), and the information selecting unit (27) of the data center (20) selects the information based on the action pattern of the mobile terminal user deduced by the deducing unit (26), referring to the unnecessary information stored in the unnecessary information storing unit (29).

**3.**
The system according to claim 1, **characterized in, that**
the time information transmitted together with the movement record from the movement record transmitting unit (11) of the mobile terminal (10) includes information about time zones, days of the week, and weekdays or holidays, and
the deducing unit (26) of the data center (20) deduces the action pattern of the mobile terminal user according to categories of the time zones, the days of the week, and the weekdays or holidays.

**4.**
The system according to claim 3, **characterized in, that**
the deducing unit (26) of the data center (20) deduces a traffic route that is used by the mobile terminal user in a predetermined time zone of a predetermined day of the week, based on the action pattern of the mobile terminal user to be deduced, and
the information selecting unit (27) of the data center (20) selects the information to be transmitted to the mobile terminal (10), in such a manner that the information contains a piece of information about the traffic route deduced by the deducing unit (26), which is used by the mobile terminal user in the predetermined time zone of the predetermined day of the week.
